# EUROPÄISCHE PATENTSCHRIFT

(11) **EP 1 932 227 B1**
(45) Veröffentlichungstag und Bekanntmachung des Hinweises auf die Patenterteilung: **30.11.2011**
(21) Anmeldenummer: 06776819.2
(22) Anmeldetag: 12.08.2006
(51) Int. Cl.: H02K 5/00, H02K 5/04, H02K 7/116, H02K 7/14

(54) **FLANSCHVERBINDUNG UND GETRIEBEMOTOR**
FLANGE CONNECTION AND TRANSMISSION MOTOR
LIAISON PAR BRIDE ET ELECTROREDUCTEUR

(30) Priorität: 27.09.2005 DE 102005046261
(43) Veröffentlichungstag der Anmeldung: 18.06.2008
(73) Patentinhaber: SEW-EURODRIVE GmbH & Co. KG, 76646 Bruchsal (DE)
(72) Erfinder: THIELEMANN, Stefan, 69115 Heidelberg (DE)
(86) Internationale Anmeldenummer: PCT/EP2006/008005
(87) Internationale Veröffentlichungsnummer: WO 2007/036260

(56) Entgegenhaltungen:
- WO-A-2005/014963
- US-A- 3 787 014
- US-A- 3 870 908
- US-A- 4 227 101
- US-A- 5 172 022

## Beschreibung

Die Erfindung betrifft einen Getriebemotor.

Adaptergehäuse mit Flanschverbindungen mit Bohrbildern sind allgemein bekannt. Dabei besteht ein Bohrbild eines Flansches aus einer Menge von Bohrungen, die am Flansch vorgesehen sind. Oft sind einige oder alle der Bohrungen auf einem Kreis, dem sogenannten Lochkreis angeordnet. In den Bohrungen sind Gewindestifte oder Schrauben vorsehbar zur Verbindung der beiden Flansche.

Industrielle Antriebe umfassen meist Getriebemotoren, die aus einem Elektromotor bestehen, der direkt oder über einen Adapter mit einem Getriebe verbunden sind.

Aus der US 3 787 014 A1 ist eine Aufhängung für einen Austauschmotor bekannt, bei der eine Flanschverbindung ausgeführt ist, die zumindest ein erstes Bohrbild umfasst, wobei mindestens ein zweites Bohrbild ohne Winkelversatz gegenüber dem ersten Bohrbild vorgesehen ist, wobei die Bohrlöcher des ersten Bohrbilds in 90°-Schritten und die des zweiten Bohrbilds in einem 120°-, einem 60°-, einem 120°- und einem 60°-Schritt entlang eines Kreises angeordnet sind.

Aus der US 3 870 908 A1 ist eine Kupplungsglocke für die Montage von Elektromotoren bekannt, bei dem zwei quadratische Bohrbilder ohne relativen Winkelversatz vorgesehen sind, wobei unter Verwendung eines ersten Bohrbilds ein Motor mit großem Flansch und unter Verwendung des zweiten Bohrbilds ein Motor mit kleinem Flansch montierbar sind und je zwei Bohrlöcher des erste Bohrbilds und zwei Bohrlöcher des zweiten Bohrbilds auf einem gemeinsamen Durchmesser durch den Mittelpunkt einer zylindrischen Bohrung im Gehäuse liegen.

Motor, umfassend einen Adapter mit Adaptergehäuse und einen ersten Motor mit erstem Motorgehäuse oder alternativ zum ersten Motor mit erstem Motorgehäuse einen zweiten Motor mit einem zweiten Motorgehäuse,
wobei die mechanische Verbindungsschnittstelle zwischen einem ersten Motorgehäuse und Adaptergehäuse ein erstes Bohrbild umfasst
und die Verbindungsschnittstelle zwischen einem zweiten Motorgehäuse und Adaptergehäuse ein zweites Bohrbild umfasst,
wobei als Motor entweder ein erster Motor mit erstem Motorgehäuse über das erste Bohrbild mit dem Adaptergehäuse verbunden ist oder wobei als Motor ein zweiter Motor mit zweitem Motorgehäuse über das zweite Bohrbild mit dem Adaptergehäuse verbunden ist.

Der Erfindung liegt daher die Aufgabe zugrunde, Verbindungen, die zur Montage für eine möglichst große Vielfalt von Sorten von Getriebemotor-Vorrichtungen verwendbar sind, weiterzubilden, wobei weniger Lagerraum für Baureihen von Vorrichtungen mit dieser Verbindung benötigt werden soll und somit auch die Kosten verringert werden sollen und dabei sicher zu stellen, dass das Getriebe relativ zum Motor unverdreht bleibt.

Erfindungsgemäß wird die Aufgabe bei dem Getriebemotor nach den in Anspruch 1 angegebenen Merkmalen gelöst.

Die Merkmale der Erfindung sind ein Getriebemotor, umfassend ein Getriebe mit Getriebegehäuse, einen Adapter mit Adaptergehäuse und einen ersten Motor mit erstem Motorgehäuse, oder alternativ zum ersten Motor mit erstem Motorgehäuse einen zweiten Motor mit einem zweiten Motorgehäuse, wobei die mechanische Verbindungsschnittstelle zwischen einem ersten Motorgehäuse und Adaptergehäuse ein erstes Bohrbild umfasst und die Verbindungsschnittstelle zwischen einem zweiten Motorgehäuse und Adaptergehäuse ein zweites Bohrbild umfasst, wobei erstes und zweites Bohrbild auf der dem ersten bzw. zweiten Motorgehäuse zugewandten Seite des Adaptergehäuses zueinander einen Winkelversatz aufweisen, wobei am Getriebegehäuse ein Bohrbild zum Adaptergehäuse hin verwendet wird, das auf der Getriebegehäuseseite, die dem Adaptergehäuse zugewandt ist, angeordnet ist, und mit denselben Winkelversatz doppelt vorhanden ist, wobei als Motor entweder ein erster Motor mit erstem Motorgehäuse über das erste Bohrbild mit dem Adaptergehäuse verbunden ist oder wobei als Motor ein zweiter Motor mit zweitem Motorgehäuse über das zweite Bohrbild mit dem Adaptergehäuse verbunden ist.

Somit steht das wahlweise Nutzen der Bohrbilder zum Verbinden der Flansche zur Verfügung. Bei Nutzung des ersten Bohrbildes zum Einbringen von Gewindestiften oder Schrauben ist zwar das zweite Bohrbild ohne Befestigungsfunktion, verringert aber die Masse der Anordnung und führt so zu geringerem Gewicht oder bei drehbar gelagerter Anordnung zu geringerem Trägheitsmoment.

Bei einer bevorzugten Ausführungsform werden bei der Verbindung zwei Bohrbilder verwendet. Dadurch kann also nicht nur eine erste sondern auch eine zweite Vorrichtung verbunden werden, die ein anderes Bohrbild aufweist, beispielsweise ein Bohrbild mit kleinerem Durchmesser. Es kann also ein einziger Flansch mit beiden Vorrichtungen verbunden werden. Somit sind weniger Teile im Lager vorzuhalten und die Lagerkosten sowie das Lagervolumen verringert.

Von Vorteil ist auch, dass zwei verschiedene Motoren mit demselben Adapter an ein Getriebe verbindbar sind. Somit sind nicht nur Teilezahl innerhalb einer Getriebebaureihe verringerbar sondern auch die Lagervolumina und Kosten.

Von Vorteil ist weiterhin, dass verschiedene Motoren, beispielsweise mit verschiedenen Nennleistungen oder verschiedenen Typs, wie Synchron- oder Asynchronmotor, verbindbar sind. Beispielsweise ist auch ein Motor mit Rundflansch ans erste Bohrbild verbindbar und ein Motor mit Quadratflansch ans zweite Bohrbild verbindbar. Servomotoren werden oft mit Quadratflansch ausgeführt, Asynchronmotoren oft mit Rundflansch.

Erstes und zweites Bohrbild weisen zueinander einen Winkelversatz auf. Von Vorteil ist dabei, dass der Winkelversatz durch eine einfache Drehung des Adapters um seine Achse, insbesondere also die Achse der Adapterwelle, realisierbar ist.

Bei einer vorteilhaften Ausgestaltung sind erstes und zweites Bohrbild verschieden aber ähnlich ausgeführt. Insbesondere sind erstes und zweites Bohrbild geometrisch ähnlich ausgeführt, insbesondere mittels einer Ähnlichkeitsabbildung, also konformen Abbildung, ineinander überführbar sind. Von Vorteil ist dabei, dass konforme Abbildungen im Wesentlichen Streckung, Drehung und Verschiebung, umfassen und somit vielfältige verschiedene Bohrbilder verwendbar sind.

Bei einer vorteilhaften Ausgestaltung sind Bohrungen des ersten Bohrbildes auf einem ersten Lochkreis angeordnet und Bohrungen des zweiten Bohrbildes auf einem zweiten Lochkreis angeordnet. Von Vorteil ist dabei, dass auch bei nur kleinem Durchmesserunterschied zwischen den Lochkreisen beide Bohrbilder unterbringbar sind auf einem Flansch, indem beispielsweise eine Drehung um einen Winkelbetrag ausgeführt wird. Somit stören die beiden Bohrbilder sich gegenseitig nicht - insbesondere ist die Festigkeit des Flansches nicht gefährdet. Alternativ stören sich auch bei gleichem Lochkreisdurchmesser verschieden große Bohrungen nicht. Denn die Drehung um den Winkelbetrag bewirkt bei geeignet großer Wahl des Winkelwertes eine genügend große Entfernung.

Bei einer vorteilhaften Ausgestaltung weist der erste Lochkreis einen größeren Durchmesser auf als der zweite Lochkreis. Von Vorteil ist dabei, dass verschieden große Motoren, verbindbar sind.

Bei der Erfindung umfasst die mechanische Verbindungsschnittstelle zwischen Getriebe und Adapter ein Bohrbild am eintriebsseitigen Gehäusebereich des Getriebes, das aus zwei Bohrbildern besteht, die durch gegenläufige Rotation um den Winkelversatz ineinander übergehen. Von Vorteil ist dabei, dass die Drehung um den Winkelversatz vom Adapter ausführbar ist und der Adapter in beiden Winkelstellungen mit dem Getriebe verbindbar ist. Somit ist bei Verbindung des zweiten Motors mit dem zweiten Bohrbild zwar eine Drehung des Adapters notwendig gegenüber der Stellung des Adapters bei Verbindung des ersten Motors mit dem ersten Bohrbild. Aber das Getriebe bleibt unverändert, wird also nicht gedreht. Denn am eintriebseitigen Gehäusebereich des Getriebes sind in beiden Drehstellungen des Adapters Bohrungen zur Verfügung. Der Adapter und das Bohrbild kompensieren sozusagen die Drehversätze.

Bei einer vorteilhaften Ausgestaltung umfasst die mechanische Verbindungsschnittstelle zwischen Getriebe und Adapter ein Bohrbild am eintriebsseitigen Gehäusebereich des Getriebes, das eine diskrete Rotationssymmetrie aufweist mit dem Wert des Winkelversatzes. Von Vorteil ist dabei, dass der Adapter sogar in verschiedenen Drehstellungen mit dem stets unverdrehten Getriebe verbindbar ist und verschiedene Motoren mit dem Adapter verbindbar sind. Dabei sind die Motoren beispielsweise ebenfalls unverdreht zueinander vorsehbar.

Insbesondere umfassen erstes und zweites Bohrbild n Bohrungen und der Winkelversatz 360 °/(2n) beträgt, wobei n eine natürliche Zahl ist, die größer als 2 ist. Von Vorteil ist dabei, dass viele Drehstellungen für den Adapter ermöglicht sind und ebenso viele Bohrbilder. Jedes Bohrbild kommt als eine diskrete Drehsymmetrie hinzu. Beispielsweise kann eine 40° Drehsymmetrie von einer 45° Drehsymmetrie für ein drittes Bohrbild überlagert werden.

Bei einer vorteilhaften Ausgestaltung weist der erste Motor eine größere Nennleistung als der zweite auf. Von Vorteil ist dabei, dass verschiedene Motoren verbindbar sind.

Bei einer vorteilhaften Ausgestaltung ist der Motor ein Servomotor oder ein Synchronmotor und das Getriebe ein ein- oder mehrstufiges Stirnradgetriebe, ein Planetengetriebe oder ein Winkelgetriebe, Von Vorteil ist dabei, dass verschiedene Sorten von Vorrichtungen erfindungsgemäß vorteilhaft verbindbar sind.

### Bezugszeichenliste

- 1: Motorgehäuse
- 2: Motorgehäuse
- 3: Adaptergehäuse
- 4: Getriebegehäuse
- 5: getriebeseitiges Bohrungsbild
- 6: erstes Bohrbild
- 7: zweites Bohrbild
- 8: eintriebsseitiges Bohrungsbild des Getriebes

Die Erfindung wird nun anhand von Abbildungen näher erläutert:
In der Figur 1a ist eine Explosionsdarstellung in symbolischer Art für eine erfindungsgemät3e Vorrichtung gezeigt.
Figur 1b zeigt einen anderen Blickwinkel als Figur 1 a.
Figur 2 zeigt das Adaptergehäuse 3 mit den motorseitigen Bohrbildern.
Figur 3 zeigt die Lochkreise der Bohrbilder.

Es sind nur die Gehäuse symbolisch angedeutet. Weitere Teile sind nicht gezeichnet. Die Gehäuseform ist ebenfalls symbolisch zu verstehen. Wirkliche Gehäuse sind auch mit Kanten oder eckigen Ausformungen ausführbar.

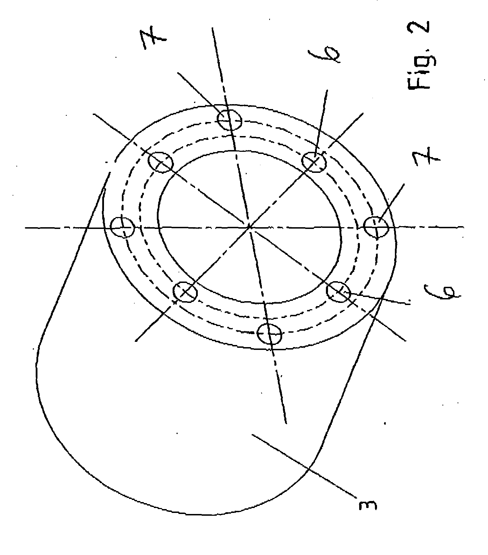

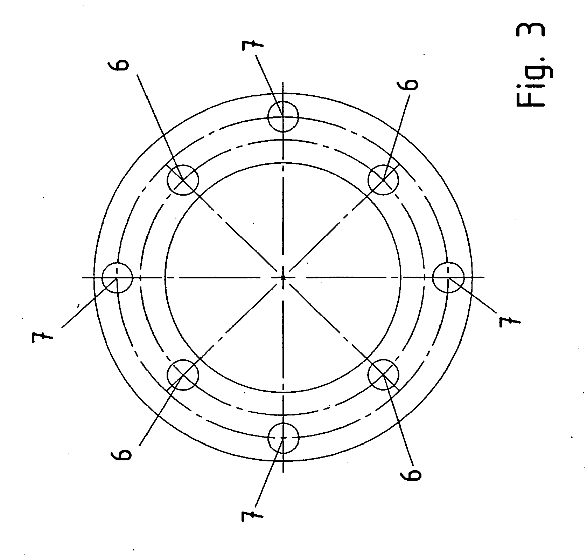

Erfindungsgemäß sind wahlweise das Motorgehäuse 1 oder das Motorgehäuse 2 an das Adaptergehäuse 3 verbindbar, wobei die Motorgehäuse 1 und 2 verschiedene Bohrbilder (6,7) aufweisen. In Figur 3 sind die verschiedenen Lochkreise der Bohrbilder (6,7) zu sehen. Der Lochkreis des Bohrbildes 6 weist einen kleineren Lochkreis auf als der Lochkreis des Bohrbildes 7. Dies ist auch deutlich der räumlichen Ansicht des symbolischen Adaptergehäuses 3 in Figur 2 zu entnehmen.

Bohrbild 6 ist gegenüber Bohrbild 7 um 45 ° verdreht angeordnet. Somit sind auch Bohrbilder, deren Lochkreisdurchmesser sich nur geringfügig unterscheiden, auf einem Adaptergehäuse anbringbar.

Die nichtbesetzten Bohrungen des nicht genutzten Bohrbildes führen zu Gewichtseinsparungen, insbesondere wenn das Gehäuse drehbar angeordnet ist.

Vorzugsweise sind die Bohrungen als Gewindebohrungen realisierbar. Dadurch sind Muttern einsparbar.

Vorzugsweise sind die Bohrungen in axialer Richtung, also in Normalenrichtung zur Flanschebene, ausgerichtet.

Besonders vorteilhaft ist auch, dass am Getriebegehäuse 4 ein Bohrbild zum Adapter hin verwendet wird, das mit demselben Winkelversatz doppelt vorhanden ist, wie am motorseitigen Ende des Adapters. Somit kann der Winkelversatz zwischen Motorgehäuse und Adaptergehäuse, welcher durch relative Drehung des Adaptergehäuses um den Winkelversatz erreicht wird, kompensiert werden, indem das ebenfalls versetzte zweite Bohrbild auf dem Getriebegehäuse 4 verwendet wird. Das Getriebegehäuse 4 ist daher relativ zum Motorgehäuse 1 oder 2 unverdreht. Nur das Adaptergehäuse 3 ist verdreht angeordnet. Der Lochkreis des getriebeseitigen Bohrungsbildes 5 am Adapter 3 gleicht dem Lochkreis des eintriebsseitigen Bohrungsbildes 8 des Getriebes.

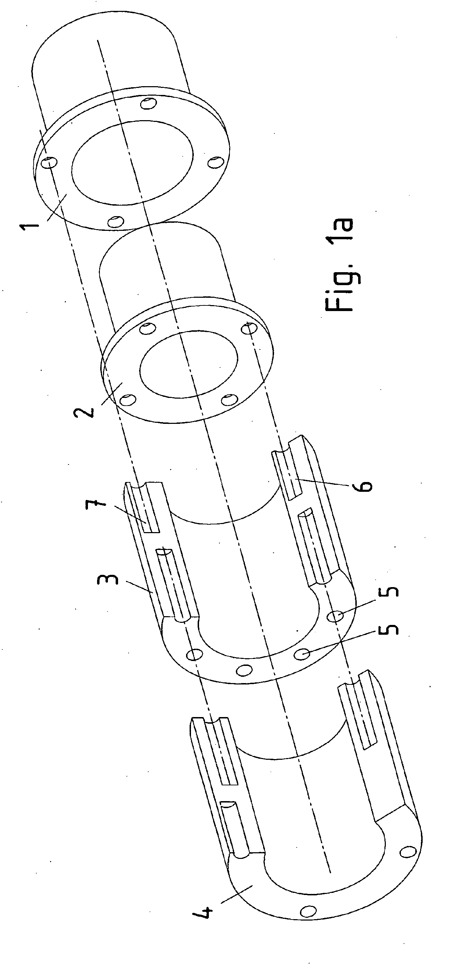

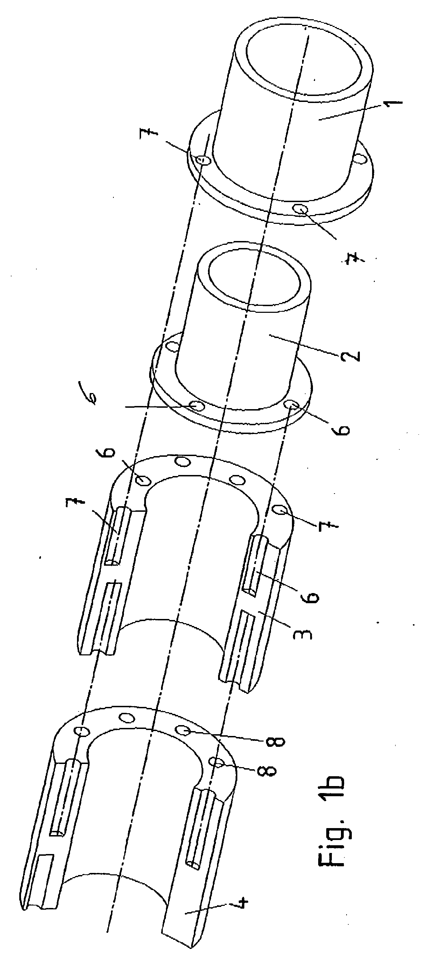

Die innerhalb der Gehäuse (1,2,3,4) liegenden Teile sind in den Figuren 1 bis 3 nicht gezeigt. Dabei handelt es sich insbesondere um drehbar gelagerte Teile, wie Motorwelle, Adapterwelle und eintreibendes Ritzel, sowie deren Lagerung und zugehörige Dichtungen.

Bei weiteren erfindungsgemäßen Ausführungsbeispielen sind statt der Gewindebohrungen Durchgangsbohrungen verwendet. Bei weiteren erfindungsgemäßen Ausführungsbeispielen kann das Bohrbild auch mehr oder weniger als vier Bohrungen umfassen. Statt zweier Bohrbilder sind auch mehr Bohrbilder vorteilhaft verwendbar. Die Winkelversätze sind entsprechend ausgewählt.

Die Schnittstelle zwischen Getriebegehäuse und Adaptergehäuse sowie zwischen Adaptergehäuse und Motorgehäuse umfasst zusätzlich zu den Bohrbildern auch Zentriermittel, wie Passungssitz und/oder Zentrierzapfen, sowie andere Mittel.

## Patentansprüche

1. Getriebemotor,
umfassend ein Getriebe mit Getriebegehäuse (4), einen Adapter mit Adaptergehäuse (3) und einen ersten Motor mit erstem Motorgehäuse (1, 2), oder alternativ zum ersten Motor mit erstem Motorgehäuse (1, 2) einen zweiten Motor mit einem zweiten Motorgehäuse (1, 2), wobei die mechanische Verbindungsschnittstelle zwischen einem ersten Motorgehäuse (1, 2) und Adaptergehäuse (3) ein erstes Bohrbild (6) umfasst
und die Verbindungsschnittstelle zwischen einem zweiten Motorgehäuse (1, 2) und Adaptergehäuse (3) ein zweites Bohrbild (7) umfasst,
wobei erstes (6) und zweites (7) Bohrbild auf der dem ersten bzw. zweiten Motorgehäuse zugewandten Seite des Adaptergehäuses zueinander einen Winkelversatz aufweisen,
wobei am Getriebegehäuse (4) ein Bohrbild (8) zum Adaptergehäuse (3) hin verwendet wird, das auf der Getriebegehäuseseile, die dem Adaptergehäuse zugewandt ist, angeordnet ist, und mit demselben Winkelversatz doppelt vorhanden ist,
wobei als Motor entweder ein erster Motor mit erstem Motorgehäuse (1, 2) über das erste Bohrbild (6) mit dem Adaptergehäuse (3) verbunden ist oder wobei als Motor ein zweiter Motor mit zweitem Motorgehäuse (1, 2) über das zweite Bohrbild (7) mit dem Adaptergehäuse (3) verbunden ist.

2. Getriebemotor nach Anspruch 1,
**dadurch gekennzeichnet, dass**
erstes (6) und zweites (7) Bohrbild geometrisch ähnlich ausgeführt sind, insbesondere mittels einer Ähnlichkeitsabbildung, also konformen Abbildung, ineinander überführbar sind.

3. Getriebemotor nach einem der Ansprüche 1 bis 2.
**dadurch gekennzeichnet, dass**
Bohrungen des ersten Bohrbildes (6) auf einem ersten Lochkreis angeordnet sind und Bohrungen des zweiten Bohrbildes (7) auf einem zweiten Lochkreis angeordnet sind.

4. Getriebemotor nach Anspruch 3,
**dadurch gekennzeichnet, dass**
der erste Lochkreis einen größeren Durchmesser aufweist als der zweite Lochkreis.

5. Getriebemotor nach einem der Ansprüche 1 bis 4,
**dadurch gekennzeichnet, dass**
die mechanische Verbindungsschnittstelle zwischen Getriebegehäuse (4) und Adaptergehäuse (3) ein Bohrbild (8) am eintriebsseitigen Gehäusebereich des Getriebes umfasst, das eine diskrete Rotationssymmetrie aufweist mit dem Wert des Winkelversatzes, sodass das Adaptergehäuse (3) in verschiedenen Drehstellungen mit dem stets unverdrehten Getriebegehäuse (4) verbindbar ist.

6. Getriebemotor nach einem der Ansprüche 1 bis 5,
**dadurch gekennzeichnet, dass**
erstes (6) und zweites (7) Bohrbild n Bohrungen umfassen und der Winkelversatz 360 °/(2n) beträgt, wobei n eine natürliche Zahl ist, die größer als 2 ist.

7. Getriebemotor nach einem der Ansprüche 1 bis 6,
**dadurch gekennzeichnet, dass**
der erste Motor eine größere Nennleistung als der zweite aufweist.

8. Getriebemotor nach einem der Ansprüche 1 bis 7,
**dadurch gekennzeichnet, dass**
der Motor ein Servomotor oder ein Synchronmotor ist und das Getriebe ein ein- oder mehrstufiges Stirnradgetriebe, ein Planetengetriebe oder ein Winkelgetriebe.

## Claims

1. Geared motor,
comprising a gearing with gearing housing (4), an adapter with adapter housing (3), and a first motor with first motor housing (1, 2), or alternatively to the first motor with first motor housing (1, 2) a second motor with a second motor housing (1, 2),
wherein the mechanical connection interface between a first motor housing (1, 2) and adapter housing (3) comprises a first hole pattern (6)
and the connection interface between a second motor housing (1, 2) and adapter housing (3) comprises a second hole pattern (7),
wherein first (6) and second (7) hole pattern have an angular offset with respect to one another on the side of the adapter housing facing the first and second motor housing respectively,
wherein on the gearing housing (4) a hole pattern (8) directed towards the adapter housing (3) is used which is arranged on the side of the gearing housing facing the adapter housing and is present twice, with the same angular offset,
wherein as the motor either a first motor with first motor housing (1, 2) is connected via the first hole pattern (6) to the adapter housing (3) or wherein as the motor a second motor with second motor housing (1, 2) is connected via the second hole pattern (7) to the adapter housing (3).

2. Geared motor according to Claim 1,
**characterised in that**
first (6) and second (7) hole pattern are of geometrically similar design, in particular can be transformed into one another by means of a similarity mapping, i.e. conformal mapping.

3. Geared motor according to one of Claims 1 to 2,
**characterised in that**
holes of the first hole pattern (6) are arranged on a first hole circle and holes of the second hole pattern (7) are arranged on a second hole circle.

4. Geared motor according to Claim 3,
**characterised in that**
the first hole circle has a greater diameter than the second hole circle.

5. Geared motor according to one of Claims 1 to 4,
**characterised in that**
the mechanical connection interface between gearing housing (4) and adapter housing (3) comprises a hole pattern (8) on the input-side housing region of the gearing which has a discrete rotational symmetry with the value of the angular offset, so that the adapter housing (3) can be connected in different rotational positions to the always unrotated gearing housing (4).

6. Geared motor according to one of Claims 1 to 5,
**characterised in that**
first (6) and second (7) hole pattern comprise n holes and the angular offset is 360°/(2n), where n is a natural number greater than 2.

7. Geared motor according to one of Claims 1 to 6,
**characterised in that**
the first motor has a greater rated power than the second.

8. Geared motor according to one of Claims 1 to 7,
**characterised in that**
the motor is a servomotor or a synchronous motor and the gearing is a single- or multi-stage cylindrical gearing, a planetary gearing or an angular gearing.

## Revendications

1. Motoréducteur,
comprenant un réducteur avec un carter de réducteur (4), un adaptateur avec un carter d'adaptateur (3) et un premier moteur avec un premier carter de moteur (1, 2) ou, en variante au premier moteur avec un premier carter de moteur (1, 2), un deuxième moteur avec un deuxième carter de moteur (1, 2), l'interface mécanique de liaison entre un premier carter de moteur (1, 2) et le carter d'adaptateur (3) comprenant un premier schéma de perçage (6)
et l'interface de liaison entre un deuxième carter de moteur (1, 2) et le carter d'adaptateur (3) comprenant un deuxième schéma de perçage (7),
le premier (6) et le deuxième (7) schéma de perçage présentant un décalage angulaire l'un par rapport à l'autre du côté du carter d'adaptateur tourné vers le premier ou le deuxième carter de moteur,
un schéma de perçage (8) étant utilisé sur le carter de réducteur (4) vers le carter d'adaptateur (3), lequel est disposé du côté du carter de réducteur qui est tourné vers le carter d'adaptateur et présent en double avec le même décalage angulaire,
un premier moteur avec un premier carter de moteur (1, 2) étant relié en tant que moteur au carter d'adaptateur (3) par le premier schéma de perçage (6) ou un deuxième moteur avec un deuxième carter de moteur (1, 2) étant relié en tant que moteur au carter d'adaptateur (3) par le deuxième schéma de perçage (7).

2. Motoréducteur selon la revendication 1,
**caractérisé en ce que**
le premier (6) et le deuxième (7) schéma de perçage sont réalisés de façon similaire géométriquement, en particulier transformables l'un en l'autre au moyen d'une transformation de similitude, donc une transformation conforme.

3. Motoréducteur selon une des revendications 1 à 2,
**caractérisé en ce que**
les perçages du premier schéma de perçage (6) sont disposés sur un premier cercle de trous et les perçages du deuxième schéma de perçage (7) sont disposés sur un deuxième cercle de trous.

4. Motoréducteur selon la revendication 3,
**caractérisé en ce que**
le premier cercle de trous présente un plus grand diamètre que le deuxième cercle de trous.

5. Motoréducteur selon une des revendications 1 à 4,
**caractérisé en ce que**
l'interface mécanique de liaison entre le carter de réducteur (4) et le carter d'adaptateur (3) comprend un schéma de perçage (8) dans la zone de carter côté entrée du réducteur, lequel présente une symétrie de rotation discrète de la valeur du décalage angulaire, de sorte que le carter d'adaptateur (3) peut être relié dans différentes positions de rotation au carter de réducteur (4) toujours non tourné.

6. Motoréducteur selon une des revendications 1 à 5,
**caractérisé en ce que**
le premier (6) et le deuxième (7) schéma de perçage comprennent n perçages et le décalage angulaire est de 360°/(2n), n étant un nombre naturel qui est supérieur à 2.

7. Motoréducteur selon une des revendications 1 à 6,
**caractérisé en ce que**
le premier moteur présente une plus grande puissance nominale que le deuxième.

8. Motoréducteur selon une des revendications 1 à 7;
**caractérisé en ce que**
le moteur est un servomoteur ou un moteur synchrone et le réducteur un engrenage droit à un ou plusieurs étages, un engrenage planétaire ou un engrenage angulaire.
